# EUROPÄISCHE PATENTSCHRIFT

(11) **EP 3 423 324 B1**
(45) Veröffentlichungstag und Bekanntmachung des Hinweises auf die Patenterteilung: **27.11.2024**
(21) Anmeldenummer: 17707526.4
(22) Anmeldetag: 24.02.2017
(51) Int. Cl.: B60W 50/12, B60W 30/16, B60W 50/14, B60W 30/10

(54) **PEDALSYSTEM FÜR EIN ZUM ZUMINDEST TEILAUTOMATISIERTEN FAHREN AUSGEBILDETES FAHRZEUG**
PEDAL SYSTEM FOR A VEHICLE DESIGNED TO BE DRIVEN IN AN AT LEAST PARTLY AUTOMATED MANNER
PÉDALIER POUR VÉHICULE CONÇU POUR UNE CONDUITE AU MOINS SEMI-AUTOMATIQUE

(30) Priorität: 02.03.2016 DE 102016203395
(43) Veröffentlichungstag der Anmeldung: 09.01.2019
(73) Patentinhaber: Bayerische Motoren Werke Aktiengesellschaft, 80809 München (DE)
(72) Erfinder: AUGST, Alexander, 80937 Muenchen (DE); DORRER, Claus, 81927 Muenchen (DE); FRIEDRICH, Reiner, 85630 Grasbrunn (DE)
(86) Internationale Anmeldenummer: PCT/EP2017/054320
(87) Internationale Veröffentlichungsnummer: WO 2017/148813

(56) Entgegenhaltungen:
- EP-A1- 2 604 462
- WO-A1-2005/105508
- DE-A1- 102012 002 318
- DE-A1- 102013 019 141
- DE-A1- 102013 019 202
- JP-A- 2000 054 860

## Beschreibung

Die Erfindung betrifft ein Pedalsystem für ein zum zumindest teilautomatisierten Fahren ausgebildetes Fahrzeug, wobei das Pedalsystem ein Fahrpedal und ein Bremspedal umfasst. Die Erfindung betrifft ferner ein Fahrzeug mit einem solchen Pedalsystem, ein Verfahren zum Steuern eines Pedalsystems sowie ein Computerprogrammprodukt.

Fahrzeuge werden in zunehmendem Maße mit Fahrerassistenzfunktionen ausgestattet, welche ein unterstütztes, teilautomatisiertes, ein hochautomatisiertes oder ein vollautomatisiertes Fahren ermöglichen, z.B. um den Fahrer von routinemäßigen Aufgaben zu entlasten oder ihn in kritischen Situationen zu unterstützen. Je höher der Automatisierungsgrad ist, desto höher sind die Anforderungen an, die Fahrfunktion unterstützende Sensoren, Aktoren und Recheneinheiten. Aus Gründen der Sicherheit, z.B. im Falle eines unsicheren Zustands oder einer nicht der Erwartung des Fahrers entsprechender Funktionsweise der Fahrfunktion, aber auch aufgrund eines noch nicht fertig entwickelten Regelwerks der Übernahme der Verantwortung im Falle eines Unfalls muss der Fahrer eines solchen Fahrzeugs daher im Stande sein, die Fahrzeugführung innerhalb kurzer Zeit zu übernehmen.

Beispielsweise sind zahlreiche Varianten von abstandsabhängigen Geschwindigkeitsregelfunktionen (Adaptive Cruise Control) sowie eines Lenkassistenten bzw. eines Stauassistenten bekannt. Solche Fahrerassistenzfunktion können aktiv in die Längsführung des Fahrzeugs eingreifen oder diese zumindest teilweise übernehmen. Es sind auch Fahrerassistenzfunktion bekannt die aktiv in die Querführung des Fahrzeugs eingreifen oder diese zumindest teilweise übernehmen. Ferner können Fahrerassistenzfunktionen auch eine Vielzahl der Fahraufgaben bis hin zum hochautomatisierten oder automatischen Fahren übernehmen. Solche Systeme bieten z.T. einen sehr unterschiedlichen Automatisierungsgrad an. Der (tatsächlich nutzbarer) Automatisierungsgrad kann außerdem innerhalb einer Strecke aufgrund diverser Randbedingungen wesentlich variieren.

Bei derzeit auf dem Markt befindlichen Fahrzeugen kann der Fahrer eine automatisierte Längs- oder Querführung des Fahrzeugs durch eine erhöhte Kraft bei der Bedienung der Bedienelemente (Fahrpedal- und/oder Bremspedal, Lenkrad) überstimmen ("Übertreten").

Beispielsweise kann während eines von dem Fahrzeug autonom vorgenommenen Lenkvorganges durch ein erhöhtes manuelles Lenkmoment des Fahrers ein "Überlenken" erfolgen. Analog hierzu kann bei einem durch das Fahrzeug vorgenommenen Beschleunigungsvorgang durch stärkeres Niederdrücken des Fahrpedals eine stärkere Beschleunigung des Fahrzeugs herbeigeführt werden.

Ein Nachteil bei derzeit bekannten Fahrzeugen besteht darin, dass eine schnelle und intuitive Übernahme der Fahrpedalbedienung sowie das Dosieren des korrekten Bedienelements mit oder ohne vorliegende Übernahme-Aufforderung (sog. Take-Over-Request, TOR) durch den Fahrer nicht gewährleistet ist. Darüber hinaus besteht ein Risiko einer Fehlbedienung, falls der Fahrer nach längerer Nichtbedienung eines Bedienelements (z.B. des Fahr- und/oder Bremspedals) möglicherweise das zu bedienende Pedal verfehlt oder verwechselt. Dies kann beispielsweise dann der Fall sein, wenn aufgrund der autonomen Fahrweise des Fahrzeugs der Fahrer sehr entspannt oder sogar schläfrig ist.

Derzeit sind teil- und hochautomatisierte Fahrsysteme eines Fahrzeugs derart ausgelegt, dass bei wesentlichen Fahrereingriffen in die Fahrzeugführung das automatisierte Fahren abgeschaltet wird. Regelt das Fahrzeug beispielsweise eine einzuhaltende Geschwindigkeit in Abhängigkeit des vorausfahrenden Verkehrs selbsttätig, so erfolgt durch die Betätigung der Bremse durch den Fahrer ein Abschalten der automatisierten Fahrfunktion.

Die EP 2 604 462 A1 offenbart ein Verfahren und eine Steuerung zum Steuern eines aktiven Fahrpedals, das einen Aktuator umfasst, der die Rückstellkraft eines Fahrpedalhebels des Fahrpedals einstellen kann, um eine Fußablage-Funktion bei aktivem Fahrgeschwindigkeitsregler zu aktivieren.

Die DE 10 2012 002 318 A1 offenbart ein Verfahren zum Betreiben eines Fahrzeugs mit einem Fahrerassistenzsystem, bei dem eine ein Lenkrad und/oder ein Pedal umfassende Führungseinrichtung einen Aktor aufweist, der dazu ausgelegt ist, in Abhängigkeit von einem Steuersignal des Fahrerassistenzsystems eine Kraftrückkopplung an dem Pedal und/oder dem Lenkrad zu erzeugen.

Die JP 2000-054860 A offenbart ein Verfahren, das eine schnelle Durchführung einer Pedalbetätigung und eine Verringerung der Belastung der Pedalbetätigung bei ausgeführter automatischer Fahrsteuerung ermöglicht.

Die DE 10 2013 019 141 A1 offenbart ein Verfahren für einen Fahrmoduswechsel bei einem Fahrerassistenzsystem. Eine Sensoreinrichtung weist einen an einem Pedal des Fahrzeugs angeordneten Sensor auf. Fahrerdaten beinhalten Berührungsdaten des Sensors. Eine Sicherheitsbedingung umfasst, dass ein Fuß des Fahrers an dem Pedal anliegt und/oder der Fahrer mit dem Fuß das Pedal auf eine vorbestimmte Pedalstellung niederdrückt.

Die DE 10 2013 019 202 A1 offenbart ein Fahrzeug mit einem Fahrerassistenzsystem, bei welchem ein Fahrer beim Durchführen von Fahrermanövern unterstützt wird, indem eine Aktoreinrichtung des Fahrerassistenzsystems dazu ausgelegt ist, in Abhängigkeit von einem Steuersignal an einer Pedalerie des Kraftfahrzeugs eine vom Fahrer spürbare Kraft zu erzeugen. Das Verfahren geht von der Situation aus, dass ein Fahrer mit dem Kraftfahrzeug Fahrmanöver durchführt, also seine Fahrsituation verändert. Ausgehend von einem aktuellen Manöverschritt, also der aktuellen Lenkradstellung und der aktuellen Stellung der Pedalerie, wird anhand von Objektdaten ermittelt, was passieren würde, wenn der Fahrer von dem aktuellen Manöverschritt zu von dem aktuellen Manöverschritt verschiedenen Manöverschritten wechselt. Hierzu wird ein Risikowert ermittelt, welcher eine Wahrscheinlichkeit angibt, dass sich eine Kollision des Kraftfahrzeugs mit einem der Objekte in der Umgebung ergibt, falls zu einem bestimmten Manöverschritt gewechselt wird. Durch Ermitteln der Risikowerte für eine Vielzahl von möglichen Manöverschritten ergibt sich in dem Fahrerassistenzsystem ein Kennfeld, das für eine Vielzahl möglicher Lenkradstellungen oder Lenkwinkel und eine Vielzahl von Beschleunigungs- bzw. Abbremsvorgängen einen Risikowert zuordnet.

Es besteht das Bedürfnis für eine schlüssige Lösung für ein Mitsteuern eines Fahrzeugs mit zumindest teilweise automatisierter Längsführung durch den Fahrer, z.B. für den Fall, dass der Fahrer zumindest die Längsführung des Fahrzeugs in kurzer Zeit übernehmen muss oder übernehmen möchte, bevorzugt, ohne dass es dabei zu einer Abschaltung oder Unterbrechung der Fahrerassistenzfunktion führt.

Diese Aufgabe wird durch ein Pedalsystem gemäß den Merkmalen des Patentanspruches 1, ein Fahrzeug gemäß den Merkmalen des Patentanspruches 13, ein Verfahren gemäß den Merkmalen des Patentanspruches 14 sowie ein Computerprogrammprodukt gemäß den Merkmalen des Patentanspruches 15 gelöst. Vorteilhafte Ausgestaltungen ergeben sich aus den abhängigen Patentansprüchen.

Die Erfindung schlägt ein Pedalsystem für ein zum zumindest teilautomatisierten Fahren ausgebildetes Fahrzeug vor, wobei das Pedalsystem zumindest ein Fahrpedal und ein Bremspedal umfasst. Dem Pedalsystem ist eine Abbildungsfunktion zwischen einer Pedalbetätigung und Steuerparametern für die Längsführung des Fahrzeugs zugeordnet. Das Pedalsystem ist, wenn das Fahrzeug zumindest teilweise automatisiert gesteuert wird, dazu ausgebildet, im Betrieb des Fahrzeugs die Abbildungsfunktion zwischen der Pedalbetätigung und den Steuerparametern für die Längsführung des Fahrzeugs in Abhängigkeit einer den Automatisierungsgrad repräsentierenden Größe der Fahrt des Fahrzeugs sowie zumindest einer ersten Bedingung zu einer ersten Veränderung, insbesondere zur Einschränkung, der Abbildungsfunktion der Pedalbetätigung und/oder zumindest einer zweiten Bedingung zu einer zweiten Veränderung, insbesondere zur Aufhebung der Einschränkung, der Abbildungsfunktion der Pedalbetätigung zu variieren. Als Steuerparameter können dabei die von der Pedalbetätigung abhängigen, resultierenden Steuerparameter verarbeitet werden. Beispielsweise kann es sich bei einem Steuerparameter auch um eine an den Antrieb des Fahrzeugs übermittelte Sollgröße für die Fahrzeugbeschleunigung und/oder Geschwindigkeit und/oder Drehzahl handeln. Das Pedalsystem ist erfindungsgemäß dazu ausgebildet, die Abbildung der Pedalbetätigung des Fahrpedals und/oder des Bremspedals in eine Längsführung des Fahrzeugs abhängig von einer aktuellen und vorangegangenen Überwachung bestimmter Raumbereiche in der Umgebung des Fahrzeugs zu variieren.

Die Erfindung ermöglicht es, bestimmte Einflüsse auf die Fahrzeugführung auszuüben, wenn das Fahrzeug zumindest teilweise automatisiert gesteuert wird. Insbesondere kann der Fahrer bestimmte Manöverentscheidungen treffen, ohne dabei die Fahrautomatisierung zu aktivieren und das Risiko einer Verwechslung von Bedienelementen oder eines fahrerischen Fehlers einzugehen.

Das Pedalsystem ermöglicht eine intelligente Interaktion zwischen einem automatisierten und manuellen Fahren. Das Fahrzeug erlaubt ein intelligentes Mitsteuern, insbesondere der Längsdynamik des Fahrzeugs. Der Pedalgang kann genutzt werden, ebenso wie Abbildungskennlinien angepasst werden können, mit dem Ziel, eine Fahrermitwirkung bei maximalem Schutz zuzulassen.

Dabei kann das Pedalsystem derart ausgestaltet sein, dass selbst bei einem plötzlichen, erwünschten oder notwendigen Übergang von einem (teil)automatisierten Fahrmodus zu einem manuellen oder zumindest teilweise manuellen Modus sich auch bei möglichen Bedienfehlern des Fahrers keine gefährlichen Konsequenzen ergeben. Dabei kann das Pedalsystem derart ausgestaltet sein, dass ein solches Mitsteuern der Längsführung des Fahrzeugs mit zumindest einem Pedal des Pedalsystems (mit variierten bzw. eingeschränkten Abbildungsfunktion) nicht automatisch zu einer Abschaltung oder Unterbrechung der Fahrerassistenzfunktion führt.

Das Fahrpedal und das Bremspedal können getrennte Bedienelemente des Pedalsystems sein. Ebenso können das Fahrpedal und das Bremspedal durch ein universelles Pedal zur Steuerung der Beschleunigung und Verzögerung des Fahrzeugs ausgebildet sein. Insbesondere kann vorgesehen sein, dass das Pedalsystem zumindest ein Bedienelement zu einer stufenlosen Steuerung der Längsführung des Fahrzeugs mit einer Hand umfasst. So ist es beispielsweise nicht erforderlich, dass die Pedale bzw. Bedienelemente des Pedalsystems mit einem oder mehreren Füßen bedient werden. Vielmehr ist auch eine Bedienung mit einer oder zwei Händen möglich.

Unter der Abbildungsfunktion der Pedalbetätigung ist die Abbildung einer Druckkraft auf das betreffende Pedal und/oder eine Pedalposition, insbesondere eines Pedalwinkels, in eine Längsführung des Fahrzeugs zu verstehen. Die Abbildungsfunktion der Pedalbetätigung wird durch einen mathematischen Zusammenhang ausgedrückt, beispielsweise in Gestalt einer oder mehrerer Kennlinien, von Koeffizienten einer Formel oder von Werten, die in einer Look-up-Tabelle hinterlegt sind. Der mathematische Zusammenhang kann Zeitwerte oder Kennzahlen umfassen, die einen oder mehrere zeitliche Verhaltensparameter der Abbildungsfunktion der Pedalbetätigung auf die Längsführung des Fahrzeugs repräsentieren. Der mathematische Zusammenhang kann in einer Recheneinheit oder einem Speicher des Pedalsystems hinterlegt sein.

Das Variieren der Abbildungsfunktion ist als Veränderung des mathematischen Zusammenhangs der Abbildungsfunktion der Pedalbetätigung, z.B. der eben erwähnten Kennlinie, zu verstehen.

Die Einschränkung der Abbildungsfunktion der Pedalbetätigung umfasst einen Ausschluss einer zu hohen Beschleunigung oder Bremsung oder einen zu schnellen Anstieg einer Beschleunigung oder Bremskraft. Ebenso umfasst die Einschränkung der Abbildungsfunktion der Pedalbetätigung eine Einschränkung oder Umwandlung der genannten Kriterien. So kann beim Erreichen eines bestimmten Automatisierungsgrads des Fahrzeugs die erste Abbildungsfunktion genutzt werden, die eine Einschränkung der Abbildungsfunktion der Pedalbetätigung in die Längsdynamik bewirkt und die zweite Bedingung zur Aufhebung zur Rückkehr zu der ursprünglichen Abbildungsfunktion ohne die Einschränkung der Abbildungsfunktion der Pedalbetätigung.

Insbesondere können dadurch zum Variieren der Abbildungsfunktion der Pedalbetätigung für unterschiedliche Automatisierungsgrade unterschiedliche erste und/oder unterschiedliche zweite Bedingungen gelten bzw. verwendet werden.

Dieser Vorgehensweise liegt die Überlegung zugrunde, dass die Betätigung des Fahrpedals oder des Bremspedals, z.B. in Form einer Druckkraft oder eines Pedalwinkels, beim zumindest teilweise automatisierten Fahren abhängig von weiteren Bedingungen unterschiedlich umgesetzt wird. Die Abbildungsfunktion wird situationsabhängig variiert. Beispielsweise können mehrere Kenngrößen der jeweiligen Abbildungsfunktion, z.B. zumindest zwei unterschiedliche Steigungen der Steuerparameter für zumindest zwei unterschiedliche Wertebereiche, die eine Betätigung (z.B. des Pedalwinkels) zumindest eines Bedienelements repräsentieren, verändert, insbesondere eingeschränkt, werden.

Die Variation der Abbildungsfunktion kann selektiv sowie unterschiedlich für die unterschiedlichen Bedienelemente des Pedalsystems angewandt werden. Eine selektive Einschränkung einer resultierenden Fahrzeugreaktion (d.h. des Effekts der Pedalbetätigung) bei der Pedalbetätigung kann ebenso vorgesehen sein.

Die Abbildungsfunktion der Pedalbetätigung kann zumindest zwei Betriebszustände (Modi) annehmen. Ein erster Betriebszustand betrifft im Wesentlichen ein manuelles oder unterstütztes Fahren. Der zweite Betriebszustand bezieht sich auf ein teilautomatisiertes oder hochautomatisiertes Fahren. Die Übergänge zwischen den Modi können abhängig von der ersten und/oder der zweiten Bedingung erfolgen.

Gemäß einer zweckmäßigen Ausgestaltung umfasst das Pedalsystem ein Mittel zur Ermittlung eines oder mehrerer Parameter einer Fahrsituation; Ermittlung eines Maßes an Einschränkung der Abbildungsfunktion für das Pedalsystem bzw. das Fahrpedal und/oder das Bremspedal, abhängig von dem oder den ermittelten Parametern der Fahrsituation; Variation der Abbildungsfunktion zwischen einer Pedalbetätigung und der Längsführung des Fahrzeugs für das Pedalsystem bzw. das Fahrpedal und/oder das Bremspedal, abhängig vom ermittelten Maß der Einschränkung.

Als Parameter der Fahrsituation können insbesondere eine oder mehrere Zeiten bis zu einer Kollision (sog. Time-To-Collision, TTC) zu einem oder mehreren Objekten, insbesondere Verkehrsteilnehmern, gelten. Es ist zweckmäßig, wenn die Abbildungsfunktion beider Pedale, insbesondere abhängig voneinander, angepasst wird.

In einer zweckmäßigen Ausgestaltung kann das Maß an Einschränkung von einer mit weiteren Mitteln des Fahrzeugs festgestellten Notwendigkeit und/oder einem Gefahrenpotential und/oder einer Handlungsempfehlung, ein bestimmtes Manöver durchzuführen, abhängig sein. Ein Manöver kann eine (starke) Bremsung oder eine (starke) Beschleunigung sein, beispielsweise für ein Überholmanöver, einen Einfädelvorgang oder einen notwendigen Bremsvorgang. Allgemein kann ein Manöver ein beliebiges Manöver sein, welches einen Eingriff in eine Längsführung des Fahrzeugs erfordert oder bedingt. Beispielsweise kann es sich bei einem Manöver um ein Überholmanöver, Spurwechselmanöver, Wendemanöver, Rangiermanöver, Einparkmanöver handeln. Einhergehend damit ist es zweckmäßig, eine Information an den Fahrer des Fahrzeugs zu einem entsprechenden Manöver und/oder mit einer entsprechenden Handlungsanweisung auszugeben.

Gemäß einer weiteren zweckmäßigen Ausgestaltung besteht zwischen der Einschränkung der Abbildungsfunktion der Pedalbetätigung für das Fahrpedal und der Einschränkung der Abbildungsfunktion der Pedalbetätigung für das Bremspedal ein vordefinierter mathematischer Zusammenhang. Dies bedeutet, die Einschränkungen der Abbildungsfunktion für das Fahrpedal und das Bremspedal können voneinander abhängig sein. Der mathematische Zusammenhang kann zeitabhängige Parameter, wie z.B. Zeitkonstanten, umfassen. Beispielsweise kann eine Veränderung, insbesondere die Einschränkung der Abbildungsfunktion für das Fahrpedal, später und/oder erst nach Überprüfung einer weiteren Bedingung erfolgen. Das Verhalten der beiden Pedale kann auch derart gestaltet werden, dass sich nach der Bedienung eines der Pedale aufgrund einer bestimmten Bedienung, die Abbildungsfunktion des anderen Pedals verändert.

Alternativ oder zusätzlich können für das Fahrpedal und für das Bremspedal unterschiedliche Kombinationen aus der oder den ersten Bedingungen und/oder der oder den zweiten Bedingungen und deren Parametern gelten. Es können somit ein oder mehrere erste Bedingungen berücksichtigt werden, bei welchen ein gleicher Zustandsübergang von beiden Pedalen in einen manuellen oder automatisierten Betriebsmodus erfolgt und gleichzeitig eine oder mehrere zweite Bedingungen, bei welchen nur bei einem der Pedale ein Zustandsübergang durchgeführt wird oder ein umgekehrter Zustandsübergang erfolgt.

Gemäß einer weiteren zweckmäßigen Ausgestaltung ist das Pedalsystem zum Ermitteln von einem Maß für einen voraussichtlichen Erfolg zumindest eines bestimmten Manövers, insbesondere in Bezug auf die vorliegende Verkehrssituation und/oder vorherrschende Bedingungen innerhalb oder außerhalb des Fahrzeugs, ausgestaltet, wobei die Einschränkung der Abbildungsfunktion abhängig von dem ermittelten Maß des voraussichtlichen Erfolgs des bestimmten Manövers ist.

Dabei kann insbesondere mit weiteren Mitteln des Fahrzeugs ein Maß für einen voraussichtlichen Erfolg eines bestimmten Manövers, insbesondere in Bezug auf die vorliegende Verkehrssituation und/oder oder vorherrschende Bedingungen innerhalb oder außerhalb des Fahrzeugs bestimmt werden. Ein solcher voraussichtlicher Erfolg kann abhängig von Wahrscheinlichkeitswerten für einen Erfolg, Misserfolg oder Abbruch eines Manövers ermittelt werden. Das Pedalsystem kann die entsprechende bzw. mit dem Maß für einen voraussichtlichen Erfolg des bestimmten Manövers korrespondierende Information, insbesondere mittels Einlesens ermitteln.

Falls ein zumindest teilweise automatisiert durchführbares Manöver ein hohes (ein gewisses Maß überschreitendes) Erfolgsmaß aufweist, kann eine stärkere, insbesondere wesentliche, Einschränkung der Abbildungsfunktion erfolgen.

Falls ein zumindest teilweise automatisiert durchführbares Manöver ein niedriges (ein gewisses Maß unterschreitende) Erfolgsmaß aufweist, kann keine oder eine geringe Einschränkung der Abbildungsfunktion, insbesondere eine auf ein bestimmtes Maß reduzierte, Einschränkung der Abbildungsfunktion erfolgen.

Gemäß einer weiteren zweckmäßigen Ausgestaltung umfasst die zumindest eine zweite Bedingung für das Fahrpedal und das Bremspedal eine Übernahmeaufforderung bezüglich der durch den Fahrer durchzuführenden Längsführung des Fahrzeugs. Die Übernahmeaufforderung kann mit Mitteln des Fahrzeugs, z.B. dem System zum zumindest teilweise automatisierten Fahren, generiert und/oder über eine Mensch-Maschine-Schnittstelle an den Fahrer übermittelt werden. Dies kann z.B. abhängig von einem erfolgten oder erwarteten Absinken des Automatisierungsgrads und/oder abhängig von der gerade vorherrschenden Verkehrssituation erfolgen.

Bei der Übernahmeaufforderung kann es sich um einen sog. Take-Over-Request (TOR) oder einen Hands-On-Request (HOR) oder um eine explizite Aufforderung handeln, ein bestimmtes Pedal und/oder das Lenkrad des Fahrzeugs zu bedienen. Bei einem HOR wird der Fahrer dazu aufgefordert, Hände und/oder Füße an betreffende Bedienelemente anzulegen, um gegebenenfalls korrigierend eingreifen zu können.

Ein solches Vorgehen kann zweckmäßig sein, wenn eine "wesentliche fahrerische Aufgabe" in Bezug auf eine Längs- und/oder Querführung des Fahrzeugs durchzuführen ist. Eine solche wesentliche fahrerische Aufgabe kann eine durch den Fahrer gewünschte und im Verhältnis zu einer bereits durch das zumindest teilweise automatisierte Fahren umgesetzte, zusätzliche Beschleunigung oder Verzögerung des Fahrzeugs sein, welche zusätzlich oder in Relation zu der durch die Fahrzeugautomatisierung bestimmten Beschleunigung oder Verzögerung durchzuführen bzw. vorzunehmen ist.

Eine zusätzliche Beschleunigung oder Verzögerung kann additiv, multiplikativ oder logarithmisch der bereits durch die Fahrautomatisierung angeforderten Beschleunigung überlagert werden. Die zweite Bedingung kann abhängig sein von einer Dringlichkeit der Übernahmeaufforderung bzw. einer Kritikabilität einer aktuellen oder in Kürze erwarteten Verkehrssituation.

Gemäß einer weiteren zweckmäßigen Ausgestaltung umfasst die zumindest eine zweite Bedingung für das Fahrpedal und/oder für das Bremspedal die Übernahme einer bezüglich einer durch den Fahrer des Fahrzeugs aktuell oder in Zukunft durchzuführenden Querführung des Fahrzeugs, insbesondere einer Lenkbereitschaft und/oder einer Lenkaktion. Die zweite Bedingung, die eine Einschränkung der Abbildungsfunktion eines Pedals aufhebt, wird festgestellt, wenn ein Lenkradsensor eine Griffkraft und/oder eine bestimmte Lenkaktion detektiert. Die Lenkbereitschaft kann mittels eines sog. Hands-On-Sensors am Lenkrad und/oder mit Hilfe einer im Innenraum des Fahrzeugs angeordneten Kamera detektiert werden. Solche Sensoren, z.B. auf kapazitiver Basis, sind dem Fachmann bekannt. Die Lenkaktion kann mittels eines Lenkwinkelsensors oder einer Lenkrafterfassung erkannt werden.

Die zweite Bedingung liegt beispielsweise vor, wenn eine erhöhte, ein bestimmtes Maß übersteigende Umgriffkraft am Lenkrad, z.B. an einer oder zwei Stellen des Lenkrads, festgestellt wird und eine gleichzeitige Krafteinwirkung auf eines der Pedale durch den Fuß des Fahrers festgestellt wird.

Als Lenkrad kann im Rahmen dieser Beschreibung auch ein (nicht-rundes) Bedienelement, z.B. ein Joystick, zur Steuerung der Lenkung bzw. Querdynamik des Fahrzeugs verstanden werden.

Gemäß einer weiteren zweckmäßigen Ausgestaltung ist die zumindest eine erste Bedingung und/oder die zumindest eine zweite Bedingung von einem Aufmerksamkeitszustand des Fahrers abhängig. Der Aufmerksamkeitszustand kann ein allgemeiner Aufmerksamkeitszustand des Fahrers sein, der mit Mitteln des Fahrzeugs ermittelt wird. Hierzu kann beispielsweise eine den Fahrer des Fahrzeugs detektierende Innenraumkamera eingesetzt werden. Bei dem Aufmerksamkeitszustand kann zwischen der Aufmerksamkeit über unterschiedliche Sinneswahrnehmungen bzw. Wahrnehmungskanäle des Fahrers unterschieden werden. Es ist zweckmäßig, wenn eine Unterscheidung erfolgt, auf welche bestimmte Fahrbahnbereiche und/oder Objekte sich diese bezieht. Objekte können aktuell relevante Verkehrsteilnehmer, ein vor dem eigenen Fahrzeug befindliches Fahrzeug oder auch ein hinter dem eigenen Fahrzeug herfahrendes Fahrzeug verstanden werden.

Gemäß einer weiteren zweckmäßigen Ausgestaltung ist das Pedalsystem dazu ausgebildet, die Abbildung der Pedalbetätigung des Fahrpedals und/oder des Bremspedals in eine Längsführung des Fahrzeugs abhängig von einer aktuellen und vorangegangenen Überwachung bestimmter Raumbereiche in der Umgebung des Fahrzeugs zu variieren. Dadurch kann zusätzlich überprüft werden, ob der Fahrer tatsächlich auf die Fahrbahn schaut oder geschaut hat, ehe eine Variation der Abbildung der Pedalbetätigung bzw. ein Übergang zumindest eines Pedals in einen manuellen Modus erfolgt. So kann z.B. mittels Eye-Tracking geprüft werden, ob der Fahrer auf einen Fahrbahnbereich und/oder ein Objekt auf der Fahrbahn oder in den Rückspiegel geschaut hat, was zur Durchführung einer Beschleunigung oder Bremsung relevant ist.

Gemäß einer weiteren zweckmäßigen Ausgestaltung ist das Pedalsystem dazu ausgebildet, abhängig von der Pedalbetätigung die mechanische Beweglichkeit zumindest eines der Pedale zu variieren, insbesondere einzuschränken. Zur Einschränkung der mechanischen Beweglichkeit wird zumindest eines der Pedale innerhalb vorgegebener Positionsgrenzen gehalten. Zum Beispiel kann das betreffende Pedal durch den Fahrer erst durch einen erhöhten Druck außerhalb der vorgegebenen Positionsgrenzen gebracht werden. Die Positionsgrenzen können sich auf den Pedalwinkel, z.B. einen oder mehrere Pedalwinkelbereiche, beziehen. Darüber hinaus kann es sich bei der Position um eine dreidimensionale Position handeln, z.B. ein Schieben, Drehen, Wanken oder einen parallelen Hub. Die Einschränkung in Gestalt einer Arretierung eines Pedals kann innerhalb vorausbestimmter Grenzen erfolgen.

Solche Positionsgrenzen können für zumindest einen automatisierten Fahrmodus des Fahrzeugs außerhalb der Positionsgrenzen definiert sein, die zu einem zumindest teilweise manuellen Fahren durch den Fahrer definiert sind. Die Einschränkung bzw. Arretierung kann ein mechanisches Einrasten und/oder eine Bewegungseinschränkung umfassen. Auch ein wesentlich erhöhter Bewegungswiderstand des Pedals ist von der Einschränkung umfasst. Die vorgegebenen Positionsgrenzen bzw. das Arretieren können eine oder mehrere Freiheitsgrade des Pedals betreffen.

Eine Einschränkung der Abbildungsfunktion kann sich dabei einhergehend oder zeitversetzt mit der Arretierung des Pedals auf das Bedienverhalten zumindest des einen (betreffenden) Pedals auswirken. Die Veränderung des Bedienverhaltens kann beispielsweise im Pedalsystem als Folge der Arretierung und/oder mittels einer entsprechenden, einhergehend ausgeführten elektronischen Steuerung zur Generierung oder Modifikation der Steuersignale vorgesehen sein.

Gemäß einer weiteren zweckmäßigen Ausgestaltung ist das Pedalsystem dazu ausgebildet, bei einer Variation der Abbildung der Pedalbetätigung eine wesentliche Verminderung der Pedalfederkraft und/oder ein Einfahren zumindest eines Pedals durchzuführen. Durch diese Ausgestaltung kann das Pedal von der Steuerung der Beschleunigung bzw. Verzögerung im Wesentlichen entkoppelt werden und selbsttätig oder mittels einer Mitwirkung des Fahrers in eine veränderte Stellung gebracht werden. Beispielsweise kann das Pedal eingefahren oder eingeklappt werden.

Gemäß einer weiteren zweckmäßigen Ausgestaltung ist das Pedalsystem dazu ausgestaltet, abhängig von einer den Automatisierungsgrad repräsentierenden Größe der Fahrt des Fahrzeugs einen der folgenden Parameter zu variieren:
- zumindest eine Positionsgrenze bei der Arretierung des zumindest einen Pedals;
- zumindest eine Pedalfederkraft;
- die Stellung des Pedals in einem eingefahrenen Zustand.

Das Pedalsystem kann dazu ausgestaltet sein, diese Parameter abhängig von der, den Automatisierungsgrad repräsentierenden Größe in zumindest zwei Stufen oder quasi kontinuierlich zu verändern. Dabei kann die Einschränkung der Abbildungsfunktion und/oder der Beweglichkeit zumindest eines Pedals bei höherem Automatisierungsgrads höher sein als bei einem niedrigen Automatisierungsgrad. Auch kann die Pedalfederkraft mit einem zunehmenden Maß für den Automatisierungsgrad kontinuierlich oder in zumindest zwei Stufen steigen.

Beispielsweise kann vorgesehen werden, dass eine Aufhebung der Arretierung oder eine veränderten Federkraft stufenlos oder zumindest in zwei Stufen erfolgt. Dabei kann zumindest ein Parameter der Aufhebung der Arretierung oder der veränderten Federkraft, abhängig von einem qualitativen und/oder quantitativen Parameter, insbesondere im Zusammenhang mit der ersten Bedingung und/oder der zweiten Bedingung stehen. Insbesondere kann vorgesehen werden, dass der zumindest eine Parameter der Aufhebung der Arretierung als ein Zeitintervall ausgestaltet ist, der die Zeit bis zum Erreichen zumindest eines ersten bestimmten Aufhebungszustands oder einer bestimmten Stufe der Aufhebung der Arretierung kennzeichnet.

Mit anderen Worten kann ein arretiertes Pedal auch stufenweise oder in verzögerten Stufen "gelockert" werden, d.h. bewegbar oder bedienbar durch den Fahrer gemacht werden. Die Aufhebung der Arretierung kann dabei abhängig davon erfolgen, welche zweite Bedingung, bzw. Kombination aus zumindest zwei zweiten Bedingungen vorliegt und/oder welcher quantitative Parameter der zweiten Bedingung festgestellt wird.

Bei der den Automatisierungsgrad repräsentierenden Größe kann es sich im Rahmen dieser Beschreibung um einen aktuellen Automatisierungsgrad oder einen für die nahe Zukunft (1-30 Sekunden) bestimmten Automatisierungsgrad bzw. der entsprechenden Größe handeln.

Beispielsweise kann die den Automatisierungsgrad repräsentierende Größe dann als hoch angenommen werden, wenn der Automatisierungsgrad steigt und ein bestimmtes Maß überstiegen hat und/oder als niedrig angenommen werden, wenn dieser fällt und ein vorausbestimmtes Maß unterschritten hat. Besonders bevorzugt kann ein über die Zeit kumuliertes Maß des Automatisierungsgrads berücksichtigt werden.

Als die den Automatisierungsgrad repräsentierende Größe können beispielsweise nach VDA (Verband der Automobilindustrie) definierte Maße oder Kategoriewerte gelten. Beispielsweise können dies Klassen bzw. Kategoriewerte für folgende Automatisierungsgrade sein:
A1: unterstütztes Fahren;
A2: teilautomatisiertes Fahren;
A3: hochautomatisiertes Fahren;
A4: automatisches Fahren;
A0: Automatisierungsgrad unbekannt oder niedrige Aussagen-Konfidenz.

Darüber hinaus umfasst ein Teil der Erfindung, dass die den Automatisierungsgrad repräsentierende Größe bestimmte Aspekte des erreichbaren bzw. geeigneten Automatisierungsgrads einzeln, selektiv oder in bestimmten Kombinationen berücksichtigt. Beispielsweise kann eine den Automatisierungsgrad repräsentierende Größe der Fahrt auch selektiv sein, in Bezug auf zumindest zwei unterschiedliche Aspekte der Automatisierung der Bewegung des Fahrzeugs und/oder für zwei oder mehrere unterschiedliche Fahrerassistenzfunktionen des Fahrzeugs in der Steuereinheit, z.B. in Bezug auf eine: Längsführung des Fahrzeugs und/oder Querführung des Fahrzeugs und/oder Durchführung eines Spurwechsels und/oder Durchführung eines Überholvorgangs und/oder Fahrerinformation, insbesondere im Zusammenhang mit der Fahrzeugführung.

Alle beschriebenen Merkmale der Erfindung können dabei separat und unterschiedlich für unterschiedliche Aspekte der Automatisierung angewandt werden.

Die den Automatisierungsgrad repräsentierende Größe kann auch abhängig von den Vorgaben des Fahrers und/oder von einer gespeicherten Bedienhistorie des Fahrers und/oder von, in einem Backend gespeicherten und vom Fahrzeug abrufbaren Parametern oder weiteren zweckmäßigen Kriterien (z.B. Straßenart, etc.) ermittelt und/oder berücksichtigt werden.

Besonders bevorzugt ist die erfindungsgemäße Vorrichtung zum Ermitteln einer den Automatisierungsgrad repräsentierenden Größe des Fahrzeugs für den aktuellen, insbesondere im Zeitintervall von +/- 2 Sekunden geltenden, und/oder für den in naher Zukunft von ca. 1 - 30 Sek geltenden Automatisierungsgrad ausgestaltet. Insbesondere kann das Pedalsystem zum Ermitteln, insbesondere Einlesen, eines Maßes des Automatisierungsgrads aus weiteren Vorrichtungen innerhalb oder außerhalb des Fahrzeugs ausgestaltet sein.

Eine weitere zweckmäßige Ausgestaltung sieht vor, dass die zweite Bedingung zumindest eines der Pedale abhängig von der vorangegangenen ersten Bedingung desselben Pedals und/oder des jeweils anderen Pedals ist. Bei dieser Ausgestaltung kann zumindest eine von potentiell mehreren Bedingungen zur Aufhebung der Beschränkung der Abbildungsfunktion eines Pedals zumindest teilweise von einem Grund abhängig sein, aus welchem das Pedal zuvor eingeschränkt wurde. So kann ein aus Sicherheitsgründen erfolgtes Variieren der Abbildungsfunktion eines Pedals nur aufgehoben werden, wenn der Fahrer z.B. hinreichend wach bzw. aufmerksam ist.

Zur Lösung der Aufgabe wird ferner ein Fahrzeug mit Mitteln zum zumindest teilautomatisierten Fahren und einem Pedalsystem vorgeschlagen, wobei das Pedalsystem gemäß der vorstehenden Beschreibung ausgebildet ist. Das Fahrzeug weist die gleichen Vorteile auf, wie diese vorstehend in Verbindung mit dem erfindungsgemäßen Pedalsystem erläutert wurden.

Die Erfindung schlägt ferner ein Verfahren zum Steuern eines Pedalsystems für ein zum zumindest teilautomatisierten Fahren ausgebildetes Fahrzeug vor, wobei das Pedalsystem gemäß der obigen Beschreibung ausgebildet ist. Das Verfahren umfasst die Schritte: Zuweisung einer Abbildungsfunktion zwischen einer Pedalbetätigung und Steuerparametern für die Längsführung des Fahrzeugs; Variation der Abbildungsfunktion zwischen der Pedalbetätigung und den Steuerparametern für die Längsführung des Fahrzeugs im zumindest teilautomatisierten Betrieb des Fahrzeugs, in Abhängigkeit einer den Automatisierungsgrad repräsentierenden Größe des Fahrzeugs, sowie zumindest einer ersten Bedingung zur Einschränkung der Abbildungsfunktion der Pedalbetätigung und/oder zumindest einer zweiten Bedingung zur Aufhebung der Einschränkung der Abbildungsfunktion der Pedalbetätigung; Variation der Abbildung der Pedalbetätigung des Fahrpedals und/oder des Bremspedals in eine Längsführung des Fahrzeugs abhängig von einer aktuellen und vorangegangenen Überwachung bestimmter Raumbereiche in der Umgebung des Fahrzeugs.

Das Verfahren kann weiter gemäß der obigen Beschreibung ausgestaltet sein.

Schließlich wird ein Computerprogrammprodukt vorgeschlagen, das direkt in den internen Speicher eines digitalen Rechners geladen werden kann und Softwarecodeabschnitte umfasst, mit denen die Schritte des hier beschriebenen Verfahrens ausgeführt werden, wenn das Produkt auf dem Rechner läuft.

Bei dem Rechner handelt es sich insbesondere um eine Recheneinheit des Fahrzeugs. Das Computerprogrammprodukt kann auf einem Speichermedium, wie z.B. einem USB-Speicherstick, einer DVD, einer CD-ROM, einer Festplatte oder dergleichen, gespeichert sein. Ebenso kann das Computerprogrammprodukt über eine Kommunikationsverbindung (drahtlos oder drahtgebunden) übertragbar sein.

Das erfindungsgemäße Verfahren weist die gleichen Vorteile auf, wie diese oben in Verbindung mit dem erfindungsgemäßen Pedalsystem beschrieben wurden.

Das erfindungsgemäße Pedalsystem erlaubt ein effektives Mitsteuern des Fahrzeugs bei einer automatisierten Fahrt durch den Fahrer, ohne die aktive Fahrerassistenzfunktion abschalten zu müssen bzw. ohne diese für ein signifikantes Zeitintervall unterbrechen zu müssen. Dadurch ergibt sich eine wesentliche Erhöhung des Komforts und eine intuitive Bedienung für den Fahrer. Ein weiterer Vorteil besteht in der Verringerung der Übernahmezeiten durch den Fahrer ("Driver-to-the-Loop"), weil der Fuß oder die Hand des Fahrers bereits vor der Übernahme einer Fahrfunktion am richtigen Bedienelement (Pedal) anliegen kann. Im Ergebnis ergeben sich dadurch sinnvolle Zusammenhänge bei der Interaktion des Fahrers mit dem Pedalsystem.

Bei dem Fahrzeug handelt es sich insbesondere um ein Kraftfahrzeug (Personenkraftwagen, Lastkraftwagen, Transporter oder etwa ein Zweirad, z.B. ein Motorrad). Daraus ergeben sich mehrere, in diesem Dokument beschriebene sowie weitere vom Fachmann leicht nachvollziehbare Vorteile. Des Weiteren kann das Fahrzeug auch Wasserfahrzeug oder Luft- bzw. Raumfahrzeug sein, wobei das Pedalsystem entsprechend sinngemäß ausgestaltet ist.

Die Erfindung wird nachfolgend näher anhand eines Ausführungsbeispiels in der Zeichnung erläutert. Es zeigen:
- Fig. 1: eine schematische Darstellung eines erfindungsgemäßen Pedalsystems für ein zum zumindest teilautomatisierten Fahren ausgebildeten Fahrzeugs; und
- Fig. 2: ein Zustandsdiagramm, das gemäß einem Ausgestaltungsbeispiel die erfindungsgemäße Steuerung des Pedalsystems illustriert.

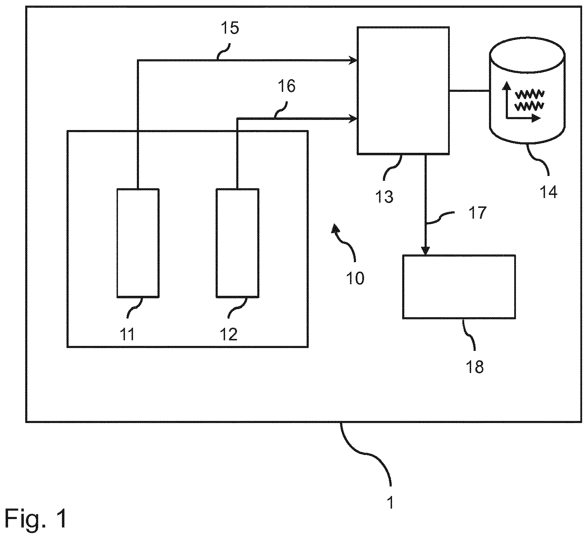

Fig. 1 zeigt ein erfindungsgemäßes Pedalsystem 10 für ein zum zumindest teilautomatisierten Fahren ausgebildetes Fahrzeug 1. Beispielhaft umfasst das Pedalsystem 10 ein Fahrpedal 11 und ein Bremspedal 12. Alternativ könnte das Pedalsystem ein universelles Pedal zur Steuerung der Beschleunigung und Verzögerung des Fahrzeugs 1 umfassen. Grundsätzlich kann jedes Bedienelement, das auch zu einer stufenlosen Steuerung der Längsführung des Fahrzeugs mit einer Hand geeignet ist, als Pedalsystem im Sinne der Erfindung verstanden werden. Letzteres ist unter dem Begriff "Handgas" bekannt.

In Abhängigkeit einer jeweiligen Position und/oder dynamischen Bewegung des Fahrpedals bzw. Bremspedals 11, 12 werden entsprechende Signale 15, 16 an eine Recheneinheit 13 des Pedalsystems übertragen. Das Signal 16 repräsentiert die Position bzw. Bewegung des Fahrpedals. Das Signal 16 repräsentiert die Position bzw. Bewegung des Bremssignals. Die Recheneinheit 13 steht mit einem Speicher 14 in Verbindung, in welchem eine oder mehrere Abbildungsfunktionen zwischen einer Pedalbetätigung des Fahr- und/oder Bremspedals 11, 12 und Steuerparametern für die Längsführung des Fahrzeugs, gespeichert sind. Die Recheneinheit 13 ist dazu ausgebildet, die in dem Speicher 14 enthaltene oder enthaltenen Abbildungsfunktionen aus dem Speicher 14 auszulesen, zu verarbeiten und als Ergebnis der Verarbeitung einen Steuerparameter 17 an eine weitere Recheneinheit 18 zur Längs- und/oder Querführung des Fahrzeugs zu übertragen. Die Recheneinheit 18 ihrerseits ist mit in der Figur nicht näher dargestellten Systemen (z.B. Aktoren, Sensoren und dergleichen) zum zumindest teilautomatisierten Fahren des Fahrzeuges 1 verbunden.

Die Abbildungsfunktion zwischen einer Pedalbetätigung des Fahrpedals 11 und/oder des Bremspedals 12 und der Längsführung des Fahrzeugs wird in dieser Beschreibung auch als Abbildung der Pedalbedienung bezeichnet und stellt die Abbildung, d.h. Übersetzung oder Umsetzung, der Druckkraft auf das betreffende Pedal und/oder dessen Pedalposition, insbesondere in Gestalt eines Pedalwinkels, in eine Längsführung des Fahrzeugs dar. Die Abbildungsfunktion kann als mathematischer Zusammenhang, z.B. einer oder mehreren Kennlinien, Koeffizienten einer Formel oder Parametern in einer Look-up-Tabelle, hinterlegt sein. Der Zusammenhang kann Zeitwerte bzw. Kennzahlen umfassen, die einen oder mehrere zeitliche Verhaltensparameter der Abbildung der Pedalbedienung auf die Längsführung des Fahrzeugs repräsentieren. Ein solcher Zusammenhang ist schematisch in dem Speicher 14 angedeutet.

Die Abbildungsfunktion der Pedalbedienung kann zumindest zwei Betriebszustände (Modi) annehmen. Dies sind ein Betriebszustand für das im Wesentlichen manuelle oder lediglich unterstützte Fahren und ein zweiter Betriebszustand für ein teilautomatisiertes oder hochautomatisiertes Fahren. Übergänge zwischen den beiden Betriebszuständen können abhängig von einer ersten und/oder einer zweiten Bedingung erfolgen.

Die erfindungsgemäß vorgesehene Variation der Abbildungsfunktion stellt eine wesentliche Veränderung des mathematischen Zusammenhangs der Abbildungsfunktion, d.h. der Abbildung der Pedalbedienung, dar. Konkret bedeutet dies die Modifikation der oder einer in dem Speicher hinterlegten Kennlinie. Die Variation erfolgt abhängig von einem Maß für den Automatisierungsgrad des Fahrzeugs sowie zumindest einer ersten Bedingung zur Einschränkung der Abbildung der Pedalbedienung und/oder zumindest einer zweiten Bedingung zur Aufhebung der Einschränkung der Abbildung der Pedalbedienung. Bei der Einschränkung der Abbildung der Pedalbedienung wird eine zu hohe Beschleunigung oder Bremsung oder ein zu schneller Anstieg einer Beschleunigung oder Bremskraft ausgeschlossen oder auf eine vorbestimmte Weise eingeschränkt bzw. umgewandelt. Beispielsweise wird bei Erreichen eines bestimmten Automatisierungsgrads des Fahrens eine erste Abbildungsfunktion genutzt, die eine Einschränkung der Abbildung der Pedalbedienung in die Längsdynamik des Fahrzeugs bewirkt. Beim Vorliegen einer zweiten Bedingung erfolgt eine Aufhebung der Einschränkung und Rückkehr zu der ursprünglichen Abbildungsfunktion ohne die Einschränkung der Abbildung der Pedalbedienung.

Zum Variieren der Abbildung der Pedalbedienung für unterschiedliche Automatisierungsgrade können unterschiedliche erste und/oder unterschiedliche zweite Bedingungen vorgesehen sein.

Das Pedalsystem kann anhand von Parametern einer bestimmten Fahrsituation gesteuert werden. Hierzu erfolgt mit Mitteln des Fahrzeugs eine Ermittlung eines oder mehrerer Parameter der Fahrsituation. Dies kann beispielsweise eine sog. Time-to-Collision (d.h. eine Zeit bis zu einer Kollision) zu einem oder mehreren Objekten, insbesondere Verkehrsteilnehmern, sein. Die entsprechenden Mittel sind in Fig. 1 nicht dargestellt. Anschließend erfolgt eine Ermittlung eines Maßes an Einschränkung der Abbildungsfunktion für die Pedale 11, 12 des Pedalsystems, abhängig von den ermittelten Parametern der Fahrsituation. Anschließend erfolgt eine Variation der Abbildungsfunktion zwischen einer Pedalbetätigung und der Längsführung des Fahrzeugs für das Fahrpedal und/oder das Bremspedal, abhängig vom ermittelten Maß der Einschränkung. Dabei ist es zweckmäßig, die Abbildungsfunktionen sowohl des Fahrpedals 11 als auch des Bremspedals 12 abhängig voneinander anzupassen. Beispielsweise wird abhängig von einer Umfelderfassung festgestellt, dass bei einem aus Sicherheitsgründen notwendigen dynamischen Manöver des Fahrzeugs der Einfluss des Fahrers auf das Bremspedal oder das Fahrpedal kontraproduktiv sein kann. In diesem Fall wird die Abbildungsfunktion des betreffenden Pedals 11, 12 zur Erreichung der notwendigen Beschleunigungswerte in einem bestimmten Wertebereich eine abgeschwächte Abbildung des Pedalwinkels oder der Druckkraft auf die tatsächliche Längsführung liefern. Alternativ können die zum Erreichen einer Voll- oder Zielbremsung erforderlichen Pedalwinkel und/oder Druckkraft erhöht werden.

Das Pedalsystem kann so ausgelegt werden, dass zwischen der Einschränkung der Abbildung der Bedienung des Fahrpedals und der Einschränkung der Abbildung der Bedienung des Bremspedals ein vordefinierter mathematischer Zusammenhang besteht. Dies bedeutet, die Einschränkung der Abbildungsfunktion für das Fahrpedal und das Bremspedal hängen voneinander ab. Dies kann beispielsweise über den mathematischen Zusammenhang und zeitabhängige Parameter realisiert werden. Das heißt, das Verhalten der beiden Pedale 11, 12 ist dann so gestaltet, dass nach der Bedienung eines der Pedale die Abbildungsfunktion des anderen Pedals sich verändert.

Zum Beispiel können bei einem hohen und steigenden Automatisierungsgrad die zum Erreichen eines Kick-Downs erforderlichen Pedalwinkel und/oder Druckkraft größer gewählt werden und die zum Erreichen einer kurz darauf folgenden Zielbremsung erforderlichen Pedalwinkel und/oder Druckkraft geringer als bei einem manuellen Fahren gewählt werden.

Ist z.B. in einer aktuellen Fahrsituation keine Fahrzeugbeschleunigung notwendig und ist der Fahrer nicht wach genug, um eine Fahrzeugbeschleunigung durchzuführen, dann bleibt die Abbildung der Pedalbedienung für das Fahrpedal im Wesentlichen unterdrückt, während die Abbildung der Pedalbedienung des Bremspedals im Wesentlichen uneingeschränkt erfolgt.

Ist in einer aktuellen Fahrsituation andererseits eine Bremsung nicht empfehlenswert, weil sich das Fahrzeug z.B. an einem Bahnübergang befindet, dann bleibt die Abbildung der Bedienung des Bremspedals unterdrückt, während die Abbildung der Fahrpedalbedienung erfolgt.

Eine bewusste Beendigung eines solchen Betriebsmodus durch eine explizite Willensäußerung des Fahrers bleibt davon natürlich unberührt.

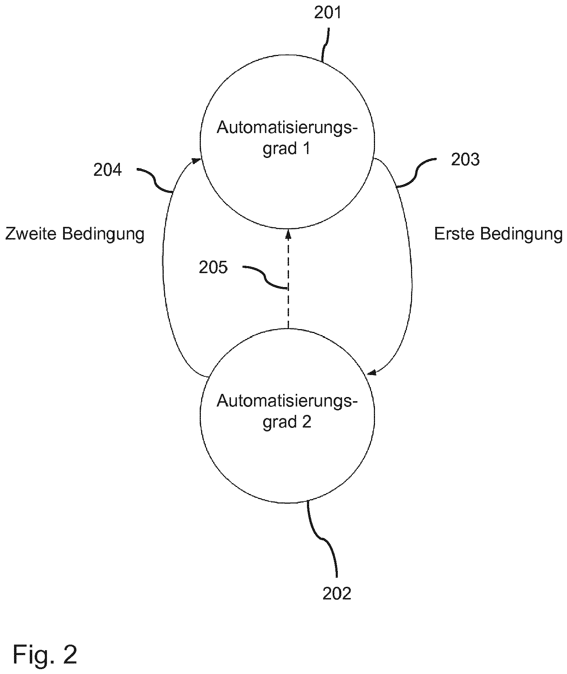

Fig. 2 zeigt ein Ausführungsbeispiel in Gestalt eines vereinfachten Zustandsdiagramms. Mit dem Bezugszeichen 201 ist ein erster Zustand, mit 202 ein zweiter Zustand gekennzeichnet. Die Bezugszeichen 203, 204 und 205 repräsentieren Zustandsübergänge zwischen dem ersten Zustand 201 und dem zweiten Zustand 202. Der erste Zustand 201 repräsentiert einen ersten Automatisierungsgrad "Automatisierungsgrad 1" zu einer Beschleunigung und/oder Verzögerungssteuerung durch den Fahrer. Dem ersten Automatisierungsgrad ist eine erste Abbildungsfunktion zugeordnet, die z.B. in Fahrzeugen ohne teil- oder hochautonome Fahrfunktionen ausgebildet ist.

Tritt eine erste Bedingung ein oder eine Kombination aus ersten Bedingungen für eine Rückveränderung der Abbildungsfunktion, so erfolgt der Zustandsübergang 203 zu dem zweiten Zustand 202. Der zweite Zustand 202 repräsentiert einen zweiten Automatisierungsgrad "Automatisierungsgrad 2", in dem Funktionen für hochautonomes Fahren aktiviert sind. Dem zweiten Automatisierungsgrad ist eine zweite Abbildungsfunktion zugeordnet. Die zweite Abbildungsfunktion bewirkt eine Einschränkung der Auswirkungen auf die Längsdynamik des Fahrzeugs. Die zweite Abbildungsfunktion kann für das Fahrpedal und das Bremspedal unterschiedlich sein. Beispielsweise können hierzu unterschiedliche zweite Abbildungsfunktionen vorgesehen sein.

Tritt eine zweite Bedingung auf oder eine Kombination aus zweiten Bedingungen für die Veränderung der Abbildungsfunktion, so erfolgt der Zustandsübergang 204 von dem zweiten Zustand 202 zu dem ersten Zustand 201.

Der Zustandsübergang 205 ermöglicht einen Übergang von dem zweiten Zustand 202 zu dem ersten Zustand 201 mit Hilfe einer redundanten zweiten Bedingung, z.B. beim Abwurf bzw. Ausfall der Automatisierung.

### Bezugszeichenliste

- 1: Fahrzeug
- 10: Pedalsystem
- 11: Fahrpedal
- 12: Bremspedal
- 13: Recheneinheit
- 14: Speicher
- 15: Signal (das die Position / Bewegung des Fahrpedals repräsentiert)
- 16: Signal (das die Position / Bewegung des Bremssignals repräsentiert)
- 17: Steuerparameter
- 18: Recheneinheit

- 201: erster Zustand
- 202: zweiter Zustand
- 203: Zustandsübergang
- 204: Zustandsübergang
- 205: Zustandsübergang

## Patentansprüche

1. Pedalsystem für ein zum zumindest teilautomatisierten Fahren ausgebildetes Fahrzeug (1), wobei das Pedalsystem (10) ein Fahrpedal (11) und ein Bremspedal (12) umfasst und wobei diesem eine Abbildungsfunktion zwischen einer Pedalbetätigung und Steuerparametern für die Längsführung des Fahrzeugs (1) zugeordnet ist, wobei das Pedalsystem (10), wenn das Fahrzeug (1) zumindest teilweise automatisiert gesteuert wird, dazu ausgebildet ist, im Betrieb des Fahrzeugs (1) die Abbildungsfunktion zwischen der Pedalbetätigung und den Steuerparametern für die Längsführung des Fahrzeugs (1) in Abhängigkeit einer den Automatisierungsgrad repräsentierenden Größe der Fahrt des Fahrzeugs (1) sowie zumindest einer ersten Bedingung zur Einschränkung der Abbildungsfunktion der Pedalbetätigung und/oder zumindest einer zweiten Bedingung zur Aufhebung der Einschränkung der Abbildungsfunktion der Pedalbetätigung zu variieren,
**dadurch gekennzeichnet, dass**
dieses dazu ausgebildet ist, die Abbildung der Pedalbetätigung des Fahrpedals (11) und/oder des Bremspedals (12) in eine Längsführung des Fahrzeugs (1) abhängig von einer durch den Fahrer durchgeführten
aktuellen und vorangegangenen Überwachung bestimmter Raumbereiche in der Umgebung des Fahrzeugs (1) zu variieren.

2. Pedalsystem nach Anspruch 1, wobei dieses ein Mittel umfasst zur:
- Ermittlung eines oder mehrerer Parameter einer Fahrsituation;
- Ermittlung des Maßes an Einschränkung der Abbildungsfunktion für das Pedalsystem abhängig von dem oder den ermittelten Parametern der Fahrsituation;
- Variation der Abbildungsfunktion zwischen einer Pedalbetätigung und der Längsführung des Fahrzeugs für das Pedalsystem (10), abhängig vom ermittelten Maß der Einschränkung.

3. Pedalsystem nach Anspruch 2, wobei das Maß an Einschränkung von einer mit weiteren Mitteln des Fahrzeugs (1) festgestellten Notwendigkeit und/oder einem Gefahrenpotential und/oder einer Handlungsempfehlung, ein bestimmtes Manöver durchzuführen, abhängig ist.

4. Pedalsystem nach einem der vorhergehenden Ansprüche, wobei zwischen der Einschränkung der Abbildungsfunktion der Pedalbetätigung für das Fahrpedal (11) und der Einschränkung der Abbildungsfunktion der Pedalbetätigung für das Bremspedal (12) ein vordefinierter mathematischer Zusammenhang besteht.

5. Pedalsystem nach einem der vorhergehenden Ansprüche, wobei dieses dazu ausgestaltet ist, ein Maß für einen voraussichtlichen Erfolg zumindest eines bestimmten Manövers, insbesondere in Bezug auf die vorliegende Verkehrssituation und/oder oder vorherrschende Bedingungen innerhalb oder außerhalb des Fahrzeugs zu ermitteln, wobei die Einschränkung zumindest einer Abbildungsfunktion abhängig von zumindest einem ermittelten Maß des voraussichtlichen Erfolgs des bestimmten Manövers ist.

6. Pedalsystem nach einem der vorhergehenden Ansprüche, wobei die zumindest eine zweite Bedingung für das Fahrpedal (11) und/oder Bremspedal (12) eine Übernahmeaufforderung bezüglich der durch den Fahrer durchzuführenden Längsführung des Fahrzeugs umfasst.

7. Pedalsystem nach einem der vorhergehenden Ansprüche, wobei die zumindest eine zweite Bedingung für das Fahrpedal (11) und/oder für das Bremspedal (12) die Übernahme einer bezüglich einer durch den Fahrer des Fahrzeugs (1) aktuell oder in Zukunft durchzuführenden Querführung des Fahrzeugs (1), insbesondere eine Lenk-Bereitschaft und/oder eine Lenkaktion, umfasst.

8. Pedalsystem nach einem der vorhergehenden Ansprüche, wobei die zumindest eine erste Bedingung und/oder die zumindest eine zweite Bedingung von einem Aufmerksamkeitszustand des Fahrers abhängig ist.

9. Pedalsystem nach einem der vorhergehenden Ansprüche, wobei dieses dazu ausgebildet ist, abhängig von der Abbildung der Pedalbedienung die mechanische Beweglichkeit zumindest eines der Pedale (11, 12) zu variieren, insbesondere einzuschränken.

10. Pedalsystem nach einem der vorhergehenden Ansprüche, wobei dieses dazu ausgebildet ist, bei einer Variation der Abbildung der Pedalbetätigung eine wesentliche Verminderung der Pedalfederkraft und/oder ein Einfahren zumindest eines Pedals (11, 12) durchzuführen.

11. Pedalsystem nach einem der vorhergehenden Ansprüche, wobei dieses dazu ausgebildet ist, abhängig von einer den Automatisierungsgrad repräsentierenden Größe der Fahrt des Fahrzeugs (1) einen oder mehrere der folgenden Parameter zu variieren:
- zumindest eine Positionsgrenze bei der Arretierung des zumindest einen Pedals;
- zumindest eine Pedalfederkraft;
- die Stellung des Pedals in einem eingefahrenen Zustand.

12. Pedalsystem nach einem der vorhergehenden Ansprüche, wobei die zweite Bedingung zumindest eines der Pedale (11, 12) abhängig von der vorangegangenen ersten Bedingung desselben Pedals und/oder des jeweils anderen Pedals ist.

13. Fahrzeug mit Mitteln zum zumindest teilautomatisierten Fahren und einem Pedalsystem (10), wobei das Pedalsystem (10) gemäß einem der vorhergehenden Ansprüche ausgebildet ist.

14. Verfahren zum Steuern eines Pedalsystems für ein zum zumindest teilautomatisierten Fahren ausgebildetes Fahrzeug (1), wobei das Pedalsystem (10) gemäß einem der vorhergehenden Ansprüche ausgebildet ist, mit den Schritten:
- Zuweisung einer Abbildungsfunktion zwischen einer Pedalbetätigung und Steuerparametern für die Längsführung des Fahrzeugs (1);
- Variation der Abbildungsfunktion zwischen der Pedalbetätigung und den Steuerparametern für die Längsführung des Fahrzeugs (1) im zumindest teilautomatisierten Betrieb des Fahrzeugs, in Abhängigkeit einer den Automatisierungsgrad repräsentierenden Größe des Fahrzeugs (1) sowie
- zumindest einer ersten Bedingung zur Einschränkung der Abbildungsfunktion der Pedalbetätigung und/oder
- zumindest einer zweiten Bedingung zur Aufhebung der Einschränkung der Abbildungsfunktion der Pedalbetätigung;
- Variation der Abbildung der Pedalbetätigung des Fahrpedals (11) und/oder des Bremspedals (12) in eine Längsführung des Fahrzeugs (1) abhängig von einer durch den Fahrer durchgeführten aktuellen und vorangegangenen Überwachung bestimmter Raumbereiche in der Umgebung des Fahrzeugs (1) .

15. Computerprogrammprodukt, das direkt in den internen Speicher eines digitalen Rechners geladen werden kann und Softwarecodeabschnitte umfasst, mit denen die Schritte gemäß Anspruch 14 ausgeführt werden, wenn das Produkt auf dem Rechner läuft.

## Claims

1. Pedal system for a vehicle (1) which is designed for at least partially automated driving, wherein the pedal system (10) comprises an accelerator pedal (11) and a brake pedal (12), and wherein this system is assigned a mapping function between pedal actuation and control parameters for the longitudinal guidance of the vehicle (1), wherein, if the vehicle (1) is controlled in an at least partially automated manner, the pedal system (10) is designed, during operation of the vehicle (1), to vary the mapping function between the pedal actuation and the control parameters for the longitudinal guidance of the vehicle (1) on the basis of a variable of the journey of the vehicle (1) representing the degree of automation and at least one first condition for restricting the mapping function of the pedal actuation and/or at least one second condition for cancelling the restriction of the mapping function of the pedal actuation,
**characterized in that**
this system is designed to vary the mapping of the pedal actuation of the accelerator pedal (11) and/or the brake pedal (12) to longitudinal guidance of the vehicle (1) on the basis of current and previous monitoring of certain spatial areas carried out by the driver in the surroundings of the vehicle (1).

2. Pedal system according to Claim 1, wherein this system comprises a means for:
- determining one or more parameters of a driving situation;
- determining the degree of restriction of the mapping function for the pedal system on the basis of the determined parameter or parameters of the driving situation;
- varying the mapping function between pedal actuation and the longitudinal guidance of the vehicle for the pedal system (10) on the basis of the degree of restriction determined.

3. Pedal system according to Claim 2, wherein the degree of restriction is dependent on a need determined using further means of the vehicle (1) and/or a potential danger and/or a recommendation to perform a certain manoeuvre.

4. Pedal system according to one of the preceding claims, wherein there is a predefined mathematical relationship between the restriction of the mapping function of the pedal actuation for the accelerator pedal (11) and the restriction of the mapping function of the pedal actuation for the brake pedal (12).

5. Pedal system according to one of the preceding claims, wherein this system is configured to determine a measure of probable success of at least a certain manoeuvre, in particular with regard to the present traffic situation and/or the prevailing conditions inside or outside the vehicle, wherein the restriction of at least one mapping function is dependent on at least one determined measure of the probable success of the certain manoeuvre.

6. Pedal system according to one of the preceding claims, wherein the at least one second condition for the accelerator pedal (11) and/or brake pedal (12) comprises a takeover request with regard to the longitudinal guidance of the vehicle to be carried out by the driver.

7. Pedal system according to one of the preceding claims, wherein the at least one second condition for the accelerator pedal (11) and/or for the brake pedal (12) comprises the takeover of lateral guidance of the vehicle (1) to be performed by the driver of the vehicle (1) currently or in the future, in particular a steering readiness and/or a steering action.

8. Pedal system according to one of the preceding claims, wherein the at least one first condition and/or the at least one second condition is/are dependent on a state of attentiveness of the driver.

9. Pedal system according to one of the preceding claims, wherein this system is designed to vary, in particular to restrict, the mechanical mobility of at least one of the pedals (11, 12) on the basis of the mapping of the pedal operation.

10. Pedal system according to one of the preceding claims, wherein this system is designed to substantially reduce the pedal spring force and/or to retract at least one pedal (11, 12) when varying the mapping of the pedal actuation.

11. Pedal system according to one of the preceding claims, wherein this system is designed to vary one or more of the following parameters on the basis of a variable of the journey of the vehicle (1) representing the degree of automation:
- at least one position limit when locking the at least one pedal;
- at least one pedal spring force;
- the position of the pedal in a retracted state.

12. Pedal system according to one of the preceding claims, wherein the second condition of at least one the pedals (11, 12) is dependent on the preceding first condition of the same pedal and/or the respective other pedal.

13. Vehicle having means for at least partially automated driving and a pedal system (10), wherein the pedal system (10) is designed according to one of the preceding claims.

14. Method for controlling a pedal system for a vehicle (1) designed for at least partially automated driving, wherein the pedal system (10) is designed according to one of the preceding claims, having the steps of:
- assigning a mapping function between pedal actuation and control parameters for the longitudinal guidance of the vehicle (1);
- varying the mapping function between the pedal actuation and the control parameters for the longitudinal guidance of the vehicle (1), during at least partially automated operation of the vehicle, on the basis of a variable of the vehicle (1) representing the degree of automation, and
- at least one first condition for restricting the mapping function of the pedal actuation, and/or
- at least one second condition for cancelling the restriction of the mapping function of the pedal actuation;
- varying the mapping of the pedal actuation of the accelerator pedal (11) and/or the brake pedal (12) to longitudinal guidance of the vehicle (1) on the basis of current and previous monitoring of certain spatial areas carried out by the driver in the surroundings of the vehicle (1).

15. Computer program product that can be loaded directly into the internal memory of a digital computer and comprises software code sections that are used to carry out the steps according to Claim 14 when the product is running on the computer.

## Revendications

1. Pédalier destiné à un véhicule (1) réalisé pour une conduite au moins semi-automatique, dans lequel le pédalier (10) comprend une pédale d'accélérateur (11) et une pédale de frein (12), et dans lequel une fonction de mappage entre un actionnement de pédale et des paramètres de commande pour le guidage longitudinal du véhicule (1) est attribuée à celui-ci, dans lequel, lorsque le véhicule (1) est commandé de manière au moins semi-automatique, le pédalier (10) est réalisé pour faire varier en cours de fonctionnement du véhicule (1) la fonction de mappage entre l'actionnement de pédale et les paramètres de commande pour le guidage longitudinal du véhicule (1) en fonction d'une grandeur représentant le degré d'automatisation de la conduite du véhicule (1) et d'au moins une première condition pour limiter la fonction de mappage de l'actionnement de pédale et/ou d'au moins une deuxième condition pour annuler la limitation de la fonction de mappage de l'actionnement de pédale,
**caractérisé en ce que**
celui-ci est réalisé pour faire varier le mappage de l'actionnement de pédale de la pédale d'accélérateur (11) et/ou de la pédale de frein (12) dans un guidage longitudinal du véhicule (1) en fonction d'une surveillance actuelle et précédente, effectuée par le conducteur, de zones spatiales déterminées dans l'environnement du véhicule (1).

2. Pédalier selon la revendication 1, dans lequel celui-ci comprend un moyen pour :
- établir un ou plusieurs paramètres d'une situation de conduite ;
- établir le degré d'une limitation de la fonction de mappage pour le pédalier en fonction du ou des paramètre(s) établi(s) de la situation de conduite ;
- faire varier la fonction de mappage entre un actionnement de pédale et le guidage longitudinal du véhicule pour le pédalier (10) en fonction du degré établi de la limitation.

3. Pédalier selon la revendication 2, dans lequel le degré de limitation dépend d'une nécessité constatée par d'autres moyens du véhicule (1) et/ou d'un risque potentiel et/ou d'une recommandation d'action d'exécuter une manoeuvre déterminée.

4. Pédalier selon l'une quelconque des revendications précédentes, dans lequel il existe une relation mathématique entre la limitation de la fonction de mappage de l'actionnement de pédale pour la pédale d'accélérateur (11) et la limitation de la fonction de mappage de l'actionnement de pédale pour la pédale de frein (12).

5. Pédalier selon l'une quelconque des revendications précédentes, dans lequel celui-ci est conçu pour établir un degré d'une réussite probable d'au moins une manoeuvre déterminée, en particulier en relation avec la situation de trafic donnée et/ou des conditions existantes à l'intérieur ou à l'extérieur du véhicule, dans lequel la limitation d'au moins une fonction de mappage dépend au moins d'un degré établi de la réussite probable de la manoeuvre déterminée.

6. Pédalier selon l'une quelconque des revendications précédentes, dans lequel ladite au moins une deuxième condition pour la pédale d'accélérateur (11) et/ou la pédale de frein (12) comprend une demande de prise en charge concernant le guidage longitudinal du véhicule à exécuter par le conducteur.

7. Pédalier selon l'une quelconque des revendications précédentes, dans lequel ladite au moins une deuxième condition pour la pédale d'accélérateur (11) et/ou pour la pédale de frein (12) comprend la prise en charge d'un guidage transversal du véhicule (1) à exécuter actuellement ou à l'avenir par le conducteur du véhicule (1), en particulier une disponibilité de direction et/ou une action de direction.

8. Pédalier selon l'une quelconque des revendications précédentes, dans lequel ladite au moins une première condition et/ou ladite au moins une deuxième condition dépendent d'un état de vigilance du conducteur.

9. Pédalier selon l'une quelconque des revendications précédentes, dans lequel celui-ci est réalisé pour faire varier, en particulier limiter, la mobilité mécanique d'au moins l'une des pédales (11, 12) en fonction du mappage de l'actionnement de pédale.

10. Pédalier selon l'une quelconque des revendications précédentes, dans lequel celui-ci est réalisé pour exécuter une diminution substantielle de la force de ressort de pédale et/ou une rentrée d'au moins une pédale (11, 12) en cas de variation du mappage de l'actionnement de pédale.

11. Pédalier selon l'une quelconque des revendications précédentes, dans lequel celui-ci est réalisé pour faire varier un ou plusieurs des paramètres suivants en fonction d'une grandeur représentant le degré d'automatisation de la conduite du véhicule (1) :
- au moins une limite de position en cas de blocage de ladite au moins une pédale ;
- au moins une force de ressort de pédale ;
- la position de la pédale dans un état rentré.

12. Pédalier selon l'une quelconque des revendications précédentes, dans lequel la deuxième condition d'au moins l'une des pédales (11, 12) dépend de la première condition précédente de la même pédale et/ou de l'autre pédale respectivement.

13. Véhicule comprenant des moyens pour une conduite au moins semi-automatique et un pédalier (10), le pédalier (10) étant réalisé selon l'une quelconque des revendications précédentes.

14. Procédé permettant de commander un pédalier destiné à un véhicule (1) au moins semi-automatique, le pédalier (10) étant réalisé selon l'une quelconque des revendications précédentes, comprenant les étapes consistant à :
- attribuer une fonction de mappage entre un actionnement de pédale et des paramètres de commande pour le guidage longitudinal du véhicule (1) ;
- faire varier, en cours de fonctionnement au moins semi-automatique du véhicule, la fonction de mappage entre l'actionnement de pédale et les paramètres de commande pour le guidage longitudinal du véhicule (1) en fonction d'une grandeur représentant le degré d'automatisation de la conduite du véhicule (1), et
- d'au moins une première condition pour limiter la fonction de mappage de l'actionnement de pédale, et/ou
- d'au moins une deuxième condition pour annuler la limitation de la fonction de mappage de l'actionnement de pédale ;
- faire varier le mappage de l'actionnement de pédale de la pédale d'accélérateur (11) et/ou de la pédale de frein (12) sur un guidage longitudinal du véhicule (1) en fonction d'une surveillance actuelle et précédente, effectuée par le conducteur, de zones spatiales déterminées dans l'environnement du véhicule (1).

15. Produit de programme informatique pouvant être directement chargé dans la mémoire interne d'un ordinateur numérique et comprenant des sections de code logiciel permettant d'exécuter les étapes selon la revendication 14 lorsque le produit est exécuté sur l'ordinateur.
